(19) Europäisches Patentamt
European Patent Office
Office européen des brevets

(11) Veröffentlichungsnummer. **0 158 881**
**A2**

(12) # EUROPÄISCHE PATENTANMELDUNG

(21) Anmeldenummer: 85103654.1

(22) Anmeldetag: 27.03.85

(51) Int. Cl.[4]: C 08 G 59/50
C 08 G 59/32, C 08 L 63/00

(30) Priorität: 04.04.84 DE 3412657

(43) Veröffentlichungstag der Anmeldung: 23.10.85 Patentblatt 85/43

(84) Benannte Vertragsstaaten: AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Kiessling, Hans-Joachim, Dr.
Eppenhainer Weg 20a
D-6239 Eppstein/Taunus(DE)

(54) **Harzartige Polymerisate, ihre Herstellung und Verwendung zur Herstellung von Formkörpern.**

(57) Harzartige Polymerisate, die primäre und/oder sekundäre Aminogruppen und gleichzeitig Hydroxylgruppen tragen und durch Umsetzung von a) Copolymeren auf Basis von Glycidylmethacrylat mit b) solchen N-H-Bindungen enthaltenden Verbindungen erhältlich sind, die mindestens 2 N-H-Bindungen im Molekül enthalten und deren Siedepunkt bei Normaldruck unter 250°C liegt, die frei sind von monomeren Aminverbindungen und wobei die Glycidylmethacrylat-Copolymeren a) überwiegend von Monomeren abgeleitet sind, die keine oder nur nicht leicht alkalisch verseifbare Gruppen enthalten. Sie liegen vor als Lösung in organischen Lösungsmitteln oder nach Säurezugabe in neutralisierter Form als wäßrige Lösung und/oder wäßrige Dispersion.

Beschrieben wird auch ihre Herstellung und Verwendung zur Herstellung von Formkörpern.

EP 0 158 881 A2

HOECHST AKTIENGESELLSCHAFT HOE 84/F 078 0158881

Harzartige Polymerisate, ihre Herstellung und Verwendung zur Herstellung von Formkörpern

Polymerisate mit primären und/oder sekundären Aminogruppen werden nach den US-A-3 634 372 und 3 719 629 durch die Umsetzung von Carboxylgruppen tragenden Copolymeren mit Äthylen- oder Propylenimin hergestellt. Dabei erhält man jedoch Polymerisatharze, die mit niedermolekularen Polyiminverbindungen verunreinigt sind, da bei der Addition des Imins an die Carboxylgruppen des Copolymerisats die Bildung von oligomeren Iminen als Nebenreaktion nicht auszuschließen ist. Ein merklicher Teil des Stickstoffes und des im Copolymeren eingebauten Imins geht häufig für die Bildung von primären und/oder sekundären Aminogruppen verloren, da Carbonsäureamid-Bindungen geknüpft werden. Schließlich stellen das Äthylen- und Propylenimin sehr toxische Verbindungen dar.

Die DE-A-30 43 355 beschreibt die Herstellung von aminogruppenhaltigen Polymerisatharzen durch Umsetzung von Carboxylgruppen tragenden Copolymeren mit Polyaminen, die mindestens eine Äthergruppe im Molekül enthalten. Bei diesem Verfahren erhält man lösliche, nicht vernetzte Produkte nur dann, wenn beträchtliche Mengen nicht umgesetzter Polyamine im Reaktionsprodukt verbleiben.

In der US-A-3 507 828 wird die Umsetzung von harzartigen, epoxifunktionellen Copolymerisaten, die unter Verwendung an ethylenisch ungesättigten Epoxiverbindungen hergestellt wurden, mit polyfunktionellen Aminen beschrieben. Über die Eigenschaften der erhaltenen löslichen Verbindungen wird nichts ausgesagt, sie enthalten jedoch noch niedermolekulare Verbindungen und werden weiter mit Aldehyden zu hitzehärtbaren Harzen umgesetzt.

Gegenstand der Erfindung sind nun lösliche, von monomeren Aminen praktisch freie, harzartige Polymerisate mit primären und/oder sekundären Aminogruppen. Diese lassen sich nach einem erfindungsgemäßen Verfahren erhalten, indem man a) Copolymere auf Basis von Glycidylmethacrylat, die überwiegend von Monomeren abgeleitet sind, die keine alkalisch verseifbaren Gruppen oder nur solche enthalten, die alkalisch nicht leicht verseifbar sind, mit b) N-H-Bindungen enthaltenden Verbindungen, die bei Normaldruck unter 250°C sieden, das sind insbesondere Amine, die mindestens 2 N-H-Bindungen im Molekül enthalten, aber auch Ammoniak, in homogener Phase bei 20 - 140°C, vorzugsweise 70-125°C umsetzt und den Überschuß an N-H-Verbindungen nach der Umsetzung bei Temperaturen unterhalb 160°C, vorzugsweise unterhalb 140°C durch Destillation entfernt.

Gegenstand der Erfindung ist auch die im Anspruch 12 genannte Verwendung zur Herstellung von Formkörpern.

Für das erfindungsgemäße Verfahren ist zwischen der N-H-Bindungen in der N-H-Verbindung einerseits und den Glycidylgruppen (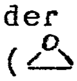) im Copolymeren andererseits ein Mindest-Äquivalentverhältnis erforderlich, und zwar ein Überschuß an N-H-Bindungen. Dieses Verhältnis ist abhängig von dem Glycidylgruppengehalt und dem Molekulargewicht des Copolymeren, der Anzahl der N-H-Bindungen in der N-H-Verbindung, wird aber auch vom Festkörpergehalt der umzusetzenden Copolymer-Lösung beeinflußt. Bei N-H-Verbindungen mit zwei N-H-Bindungen wie 3-Methoxypropylamin genügt die Anwendung eines N-H/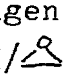 -Verhältnisses von mindestens 2:1, vorzugsweise von mindestens 3:1 und zweckmäßig höchstens 12:1. Bei N-H-Verbindungen mit 4 N-H-Bindungen wie Äthylendiamin wird jedoch zweckmäßig ein solches von mindestens 8:1, vorzugsweise mindestens 12:1 und zweckmäßig höchstens 36:1 angewandt. Festkörpergehalte in der Copolymer-Lösung liegen im allgemeinen im Bereich von 20 - 60 Gew.-%, wobei die Copolymerkonzentration zweckmäßig umso höher gewählt wird, je weniger N-H-Bindungen die N-H-Verbindung enthält. Diese Mindestäquivalent-Verhältnisse gelten für

Glycidylgruppengehalte von 10 bis 25 Gew.-% und durchschnittliche Molekulargewichte von 5000 bis 30 000 im Copolymeren. Mit ansteigendem durchschnittlichen Molekulargewicht und ansteigendem Gehalt an Glycidylgruppen im Copolymeren wählt man zweckmäßig im genannten Bereich relativ hohe N-H/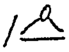 -Verhältnisse.

Die für das erfindungsgemäße Verfahren geeigneten Copolymeren auf Basis von Glycidylmethacrylat haben im allgemeinen ein durchschnittliches Molgewicht von 1000 bis 100 000. Der Anteil des Glycidylmethacrylats beträgt zweckmäßig 1 bis 80, vorzugsweise 5 bis 40 Gew.-%. Sie enthalten als Comonomere z.B. Styrol, am Benzolkern substituierte Styrole wie die verschiedenen Vinyltoluole, Methacrylsäureester von Alkoholen mit 1 bis 18, vorzugsweise 1 bis 12 C-Atomen, Vinylester von in α-Stellung verzweigten Carbonsäuren, Acrylsäureamid bzw. dessen Derivate, Methacrylsäureamid bzw. dessen Derivate oder Gemische von diesen Monomeren. Vorzugsweise kommen Styrol, am Benzolkern substituierte Styrole und Methacrylsäureester zum Einsatz. Geeignete Copolymere können auch anteilig, z.B. bis zu 30, insbesondere bis zu 10 Mol-%, bezogen auf die Summe der Comonomeren des Glycidylmethacrylats, Acryl-, Malein- oder Fumarsäureester der vorgenannten Alkohole enthalten. In diesem Falle muß mit erhöhter Amidbildung bei der Umsetzung mit der N-H-Verbindung gerechnet werden, so daß man mit einem höheren Überschuß an N-H-Verbindung und/oder mit einem niedrigeren Festkörpergehalt in der Reaktionsmischung arbeiten sollte.

Die Polymerisation des glycidylmethacrylathaltigen Monomerengemisches erfolgt nach üblichen Verfahren; besonders geeignet ist die radikalische Polymerisation mit aliphatischen Azoverbindungen.

Wesentlich für das erfindungsgemäße Verfahren ist, daß die Glycidylmethacrylat-Copolymeren mit den N-H-Verbindungen

0158881

in homogener Phase umgesetzt werden. Je nach den Löslichkeitsparametern der Copolymeren und dem Lösungsvermögen der N-H-Verbindungen kann man das Vorliegen der homogenen Phase durch Anwendung eines größeren Überschusses an N-H-Verbindungen oder durch Verwendung eines geeigneten Lösungsmittels erreichen. Dienen die N-H-Verbindungen bei der Umsetzung gleichzeitig als Lösungsmittel für das Copolymere, so wird man zweckmäßig einen größeren Überschuß an N-H-Verbindungen wählen, so daß das Äquivalentverhältnis zwischen den N-H-Bindungen in der N-H-Verbindung und den Glycidylgruppen im Copolymeren auch wesentlich größer als 12:1 sein kann. Durch die destillative Entfernung der überschüssig angewendeten N-H-Verbindungen läßt sich erreichen, daß die Aminogruppen tragenden Polymerisatharze frei von monomeren N-H-Verbindungen sind. Bei der Destillation wird vorzugsweise in Gegenwart eines Lösungsmittels gearbeitet, dessen Siedepunkt mindestens 5°C, vorzugsweise mindestens 10°C über dem Siedepunkt der Ausgangs-N-H-Verbindung liegt. Bilden Lösungsmittel und N-H-Verbindungen bei der Destillation ein Azeotrop, so soll der Siedepunkt des Lösungsmittels mindestens 5°C, vorzugsweise mindestens 10°C über dem des Azeotrops liegen. Durch richtige Auswahl des Lösungsmittels in bezug auf die Siedepunktdifferenz zwischen eingesetzter N-H-Verbindung und verwendetem Lösungsmittel gelingt die weitgehende Trennung der N-H-Verbindung vom Lösungsmittel bei der destillativen Aufarbeitung.

Geeignete Lösungsmittel sind z.B. aromatische Kohlenwasserstoffe wie Alkylbenzole, z.B. Xylole, cyclische oder lineare Äther wie Tetrahydrofuran, Äthylen- oder Propylenglykoldimethyläther, Diäthylen- oder Dipropylenglykoldimethyläther, Triäthylenglykoldimethyläther oder Ätheralkohole wie n-Propoxypropanole, Methylglykol (= Äthylenglykolmonomethyläther), Propylenglykolmonomethyläther, Diäthylen- oder Dipropylenglykolmonomethyläther, oder Alkohole wie Butanole oder Amylalkohole.

Die Auswahl des Lösungsmittels hängt vom Einsatzzweck ab. Das Lösungsmittel kann bei der Umsetzung des Copolymeren mit den N-H-Verbindungen als Lösungsvermittler dienen, um eine homogene Phase bei der Reaktion zu erreichen; man kann es aber auch erst nach der Umsetzung mit den N-H-Verbindungen zusetzen, um bei der destillativen Entfernung der überschüssigen N-H-Verbindung das im Reaktionsgefäß zurückbleibende Aminogruppen tragende Polymerisatharz flüssig und rührfähig zu halten. In vielen Fällen wird das Lösungsmittel beide Funktionen erfüllen müssen, d.h. es muß Lösungsvermittler bei der Reaktionsmischung und gleichzeitig Verdünnungsmittel für das Aminogruppen enthaltende Polymerisatharz bei der destillativen Entfernung des Überschusses der N-H-Verbindung sein. In einem solchen Fall hängt die Auswahl des Lösungsmittels sowohl von den Löslichkeitsparametern der Reaktanden als auch von der Löslichkeit des gebildeten, Aminogruppen tragenden Polymerisatharzes ab. Dabei ist zu beachten, daß Lösungsmittel mit einem höheren Siedepunkt als dem der N-H-Verbindung nur für den Destillationsprozeß zur Entfernung des Überschusses an N-H-Verbindung benötigt werden. Lösungsmittel, die bei der Umsetzung als Lösungsvermittler dienen, können flüchtiger als die eingesetzten N-H-Verbindungen sein.

Die destillative Entfernung des Überschusses an N-H-Verbindungen erfolgt vorteilhaft bei möglichst niedrigen Temperaturen, um Produkte mit heller Farbe zu erhalten. Hierfür kann die Anwendung von vermindertem Druck bei der Destillation zweckmäßig sein. Auf jeden Fall sollte das Aminogruppen tragende Polymerisatharz bei der Destillation nicht auf Temperaturen über 160, vorzugsweise nicht über 140 und insbesondere nicht über 100°C erhitzt werden.

Für das erfindungsgemäße Verfahren werden nur N-H-Verbindungen eingesetzt, deren Siedepunkt bei Normaldruck unterhalb 250°C, vorzugsweise unter 200°C liegt. Als N-H-Verbindungen kommen zweckmäßig solche in Betracht, die ein oder zwei Stickstoffatome, 0 bis 8 C-Atome und höchstens ein Sauerstoffatom enthalten, wie Ammoniak, aliphatische Amine wie Methylamin, Äthylamin, die verschiedenen Propyl-, Butyl-, Pentyl-, Hexyl-, Heptyl- und Octylamine, Äthanolamin, Isopropanolamin, Ätheramine wie $CH_3O.CH_2.CH_2.NH_2$, $CH_3O.CH_2.CH_2.CH_2.NH_2$, $C_2H_5O.CH_2.CH_2.NH_2$ oder Polyamine wie Äthylendiamin, Diaminopropane, -butane, -pentane und -hexane.

Besonders bevorzugt sind Diamine, die unter Normaldruck im Temperaturbereich von 80 bis 220, vorzugsweise von 110 bis 180°C sieden.

Der Aufbau der erhaltenen Aminogruppen tragenden Polymerisatharze und deren Eigenschaften können in weitem Umfang variiert werden, z.B. durch

- das Verhältnis der für die Herstellung des Glycidylmethacrylatcopolymeren eingesetzten "harten" und "weichen" Monomeren
- das Molgewicht dieser Copolymeren
- den Gehalt an Glycidylmethacrylat im Copolymeren
- die Auswahl der N-H-Verbindung.

Als weiche Monomere werden solche bezeichnet, die das Aminogruppen tragende Polymerisatharz weich machen, und als harte solche, die das Polymerisatharz hart machen. Für das erfindungsgemäße Verfahren geeignete weiche Monomere sind z.B. die Methacrylester von $C_4$-$C_8$-Alkoholen, wie Butylmethacrylat, 2-Äthylhexylmethacrylat; als harte Monomere kommen z.B. Styrol und/oder die verschiedenen Vinyltoluole und/oder Methylmethacrylat in Betracht.

Über den Anteil an Glycidylmethacrylat im Copolymeren und die Auswahl der zur Umsetzung verwendeten N-H-Verbindung kann der Gehalt an basischen Stickstoffatomen und N-H-Bindungen im Polymerisatharz eingestellt werden. Ein hoher Anteil an N-H-Bindungen im Copolymerisat wird

z.B. beim Einsatz von Diaminen wie Äthylen- und Propylendiamin und Ammoniak erreicht. Die Anzahl der N-H-Bindungen im Polymerisatharz und dessen Molekulargewicht beeinflussen wesentlich den Härtungsverlauf und die Vernetzungsdichte. Der Gehalt an basischen Stickstoffatomen im Polymerisatharz ist für dessen Wasserlöslichkeit bzw. dessen emulgierend wirkenden Eigenschaften nach Zugabe von Säure von Bedeutung.

Die erfindungsgemäßen Polymerisatharze lassen sich über ihre Aminogruppen, gegebenenfalls auch über ihre Hydroxylgruppen, mit Harzen und/oder anderen Verbindungen, die funktionelle Gruppen tragen, umsetzen und so härten bzw. modifizieren. Genannt seien z.B.

- Epoxidverbindungen und/oder Epoxidharze,
- Verbindungen und/oder Harze, die zur Michael-Addition befähigte Doppelbindungen tragen,
- Isocyanate und/oder Isocyanatgruppen tragende Harze, auch in Form von Verkappungsprodukten,
- Aminoharze, z.B. Harnstoff- und Melaminharze,
- Verbindungen und/oder Harze, die zur Amid- und/oder Imidbildung befähigte Carbonsäure-, und/oder Carbonsäureester- und/oder Carbonsäureanhydridgruppen enthalten.

Dabei kann es auch zweckmäßig sein, mehrere Harze oder Verbindungen mit den erfindungsgemäßen Polymerisatharzen zu kombinieren, um verbesserte anwendungstechnische Eigenschaften zu erzielen.

Die Reaktionsfähigkeit der erfindungsgemäßen Polymerisatharze kann genutzt werden

1. zur Selbstvernetzung
2. zur Härtung des Polymerisatharzes mit einem oder mehreren Kombinationspartnern,
3. zur Modifikation des Polymerisatharzes.

Zu 1) Die nur mit Methacrylestern hergestellten Polymerisatharze härten bei Temperaturen von über 150°C. Um zu Produkten zu gelangen, die unter 150°C selbst härten, kann man in das erfindungsgemäße Aminogruppen tragende Polymerisatharz gezielt funktionelle Gruppen einbauen, die mit den Aminogruppen bei niedrigeren Temperaturen reagieren. Eine Möglichkeit besteht im Einbau von relativ empfindlichen Estergruppen, das sind solche, die leichter als die der eingebauten Methacrylsäureester verseift werden, in das Polymerisat, z.B. durch die Mitverwendung von Maleinsäure- oder Acrylsäureester bei der Herstellung des Glycidylmethacrylatcopolymeren. Bei der Umsetzung solcher Glycidylmethacrylatcopolymerer mit N-H-Verbindungen müssen naturgemäß niedrige Reaktions- und Destillations-Temperaturen und ein niedriger Festkörpergehalt in der Reaktionsmischung gewählt werden, damit eine vorzeitige Vernetzung bei der Herstellung der erfindungsgemäßen Polymerisatharze vermieden wird. Unterhalb 150°C selbst vernetzende Polymerisatharze erhält man auch dann, wenn die Reaktion zwischen der N-H-Verbindung und dem Copolymeren nicht zu Ende geführt wird, so daß das Aminogruppen tragende Polymerisatharz noch Glycidylgruppen enthält. In diesem Fall ist es notwendig, die Umsetzung des Copolymeren in einem besonders niedrigen Temperaturbereich, z.B. bei 50 bis 70°C, mit einer flüchtigen N-H-Verbindung im Überschuß auszuführen und den Überschuß an N-H-Verbindung bei Temperaturen unterhalb 50°C zu entfernen.

Zu 2) Polymerisatharze mit restlichen Glycidylgruppen bzw. mit relativ empfindlichen Estergruppen haben eine begrenzte Lagerstabilität. Für den Aufbau lagerstabiler Polymerisatharze ist die vollständige Umsetzung der Glycidylgruppen mit der N-H-Verbindung und die Verwendung von Copolymeren, deren Comonomere keine bzw. nur nicht leicht verseifbare Gruppen enthalten, erforderlich. Mit solchen lagerstabilen Polymerisatharzen kann man, abhängig von der Reaktivität des Kombinationspartners, Zwei-Komponenten-Systeme formulieren, die schon bei Raumtemperatur oder darunter, z.B. bis -20°C, härten. Man kann aber auch Einkomponenten-Systeme mit weniger reaktiven Kombinationspartnern formulieren, die bei höheren Temperaturen, z.B. bis 200°C, vorzugsweise bis 150°C härten.

Zu 3) Die erfindungsgemäßen Polymerisatharze können weiter zu noch härtbaren Produkten modifiziert werden, indem man ihre funktionellen Gruppen, insbesondere die Aminogruppen, mit geeigneten Reaktionspartnern, insbesondere mit solchen, die die oben genannten funktionellen Gruppen enthalten, so zu Präkondensaten umsetzt, daß diese noch reaktive Gruppen enthalten, die die Selbsthärtbarkeit oder Fremdhärtbarkeit gewährleisten.

Bei der Härtung der vorgenannten Systeme und Präkondensate können Katalysatoren eingesetzt werden, die auf das jeweilige System in fachmännischer Weise abgestimmt sind. Z.B. sind für Systeme aus erfindungsgemäßen Polymerisatharzen und Epoxidharzen Säuren wie Salicylsäure, tertiäre Amine oder Aminophenole wie Dimethylaminophenol geeignet.

Im folgenden sind Harze und Verbindungen mit funktionellen Gruppen zur Härtung bzw. Modifikation der erfindungsgemäßen Polymerisatharze aufgeführt:
Aliphatische Polyepoxidverbindungen von epoxidierten Ölen, z.B. epoxidiertes Leinöl oder epoxidiertes Sojaöl, epoxidierte cyclische Verbindungen wie Vinylcyclohexendiepoxid, Glycidyläther von hydriertem Bisphenol A, 3,4-Epoxycyclohexylmethyl-3,4-epoxycyclohexancarboxylat, Epoxidharze auf Basis von Epichlorhydrin und mehrwertigen Alkoholen wie Pentaerythrit, Trimethylolpropan oder Sorbit, aromatische Epoxidharze, wie Polyglycidyläther von mehrwertigen Phenolen, z.B. Glycidyläther des 4,4'-Diphenylolmethans oder -propans oder Polyglycidyläther von Novolaken, Glycidylester von aliphatischen oder aromatischen Polycarbonsäuren, z.B. Terephtalsäurediglycidylester, oder Glycidylmethacrylatcopolymere. Hiervon zeichnen sich Kombinationen der erfindungsgemäßen Polymerisatharze mit Polyglycidyläthern von mehrwertigen Phenolen wie (R)Beckopox EP 140, EP 301, EP 304 der Hoechst AG (Glycidyläther auf Basis von Bisphenol A mit Epoxydäquivalentgewichten von 190, 490 bzw. 900) durch besondere Reaktivität aus, so daß eine Härtung im Temperaturbereich von 20 - 80°C möglich ist.

Als Verbindungen oder Harze, die zur Michael-Addition befähigte Doppelbindungen tragen, kommen z.B. in Frage Acryl- und/oder Methacrylsäureester von mehrwertigen Alkoholen, wie Trimethyloläthan- oder Trimethylolpropan-triacrylat und/oder die entsprechenden Methacrylsäureester, Butandioldiacrylat und/oder ungesättigte Polyester auf Basis von Fumar- und/oder Maleinsäure. Diese Polyester können in der Carbonsäurekomponente zusätzlich bis zu 70 %, vorzugsweise bis zu 30 % gesättigte mindestens zweibasische Carbonsäureeinheiten enthalten, welche keine zur Michael-Addition befähigten Doppelbindungen enthalten, wie Ortho-, Iso- oder Terephthalsäure, Tetrahydrophthalsäure, Hexahydrophthalsäure, Adipinsäure. Anstelle von Säuren kann man bei der Herstellung der Polyester natürlich auch von den entsprechenden Anhydriden ausgehen. Als Alkohole kommen für die Herstellung der ungesättigten Polyester vorzugsweise Diole wie Äthylenglykol, 1,2- und 1,3-Propandiol, Diäthylenglykol und/oder Dipropylenglykol in Betracht. Besonders reaktiv sind Kombinationen aus erfindungsgemäßen Polymerisatharzen mit mindestens trifunktionellen Acrylestern wie Glycerin, Trimethyloläthan- bzw. -propantriacrylat, Pentaerythrittetracrylat. Solche Kombinationen härten auch unterhalb Raumtemperatur sehr schnell.

Als Isocyanatverbindungen eignen sich aliphatische, cycloaliphatische, araliphatische, aromatische, und/oder heterocyclische Mono- und Polyisocyanate, z.B. (R)Desmodur N

(Handelsname für ein Polyisocyanat auf Basis von Hexamethylendiisocyanat), Isophorondiisocyanat, Toluylendiisocyanate, Diphenylmethandiisocyanat. Kombinationen mit Polyisocyanaten oder Isocyanatgruppen tragenden Harzen vernetzen selbst bei Temperaturen unter 0°C sehr schnell. Deshalb reichen schon kleine Mengen, z.B. bis zu 30 %, vorzugsweise 1 bis 20 % der erfindungsgemäßen Polymerisatharze aus, um Hydroxylgruppen tragende Polymerisatharze, wie Acrylatharze, in Gegenwart von Polyisocyanaten bei Raumtemperatur zu härten.

Für Kombinationen mit verkappten Polyisocyanaten können die im vorangegangenen Absatz genannten Polyisocyanate und/oder Isocyanatgruppen tragenden Harze mit üblichen Verkappungsmitteln wie Phenolen, Alkoholen, Acetessigsäureestern, ε-Caprolactam verwendet werden. Diese Kombinationen sind bei Raumtemperatur stabil und härten im allgemeinen erst bei Temperaturen oberhalb 100°C. In besonderen Fällen, z.B. bei Verwendung von Acetessigsäureestern zur Verkappung, kann auch bereits unter 100°C eine Vernetzung eintreten.

Als Aminharze kommen z.B. handelsübliche Harnstoff- und Melaminharze in Betracht. Die Härtungstemperatur solcher Kombinationen ist vom Aufbau der Harnstoff- und Melaminharze abhängig. So härten z.B. Kombinationen mit Melaminharzen von der Art des Hexamethoxymethylmelamins erst bei Temperaturen oberhalb 150°C, während Kombinationen mit reaktiveren Melaminharzen, die mit weniger Formaldehyd hergestellt und/oder mit sekundären bzw. tertiären Alkoholen veräthert sind, bereits unterhalb 100°C vernetzen.

Kombiniert man die erfindungsgemäßen Polymerisatharze mit Verbindungen oder Harzen, die Carbonsäure- und/oder Carbonsäureester- und/oder Carbonsäureanhydridgruppen enthalten, so tritt Carbonsäureamid- oder -imidbildung ein. Derartige Reaktionen erfolgen z.B. mit gesättigten Alkydharzen wie solchen auf Basis von Isononansäure, Phthalsäureanhydrid

und Trimethylolpropan, da diese Harze neben den Estergruppen auch Carboxylgruppen enthalten. Die Härtungstemperatur hängt von der Reaktivität der im Kombinationspartner enthaltenen Carbonsäure-, Carbonsäureester- oder Carbonsäureanhydridgruppen ab. So gelingt es z.B. mit polyfunktionellen Verbindungen oder Harzen, die reaktive Carbonsäureesterbindungen der Malonsäure oder der Acetessigsäure tragen, zu erfindungsgemäßen Kombinationen zu gelangen, die bereits bei 80 - 120°C mit den aminogruppenhaltigen Polymerisatharzen vernetzen und die Bildung von Formkörpern ermöglichen, während die Vernetzungstemperatur von Kombinationen mit den genannten gesättigten Alkydharzen bei über 120°C, vorzugsweise über 150°C liegt.

Zur Überwindung von Verträglichkeitsproblemen kann es zweckmäßig sein, das erfindungsgemäße Polymerisatharz mit einem der obengenannten Kombinationspartner zu präkondensieren und gegebenenfalls das erhaltene Präkondensat mit weiteren der oben genannten Reaktionspartner zu kombinieren. Bei der Verwendung von Estern lufttrocknender Fettsäuren wie Sojaöl- oder Leinölfettsäure führt man die Präkondensation, d.i. die zwischen den Aminogruppen des Polymerisatharzes und den Ester- bzw. Carbonsäuregruppen bei über 100°C ablaufende Amid- oder Imidbildungsreaktion zweckmäßig unter Luftausschluß durch. Die so als Präkondensate erhaltenen Kombinationen härten dann in ähnlicher Weise wie lufttrocknende Alkydharze mit Luftsauerstoff bei Raumtemperatur, zeichnen sich jedoch gegenüber diesen durch verbesserte Antrocknung bei guter Durchtrocknung aus. Als Ester lufttrocknender Fettsäuren kommen dabei solche von einwertigen Alkoholen, z.B. des Methanols, oder mehrwertigen Alkoholen, insbesondere solchen Produkten in Frage, in denen ein Teil der Hydroxylgruppen des mehrwertigen Alkohols mit gesättigten Carbonsäuren verestert ist, wie in langöligen Alkydharzen mit Phthalsäure.

Die erfindungsgemäßen Kombinationen lassen sich bei entsprechender Auswahl der erfindungsgemäßen Polymerisatharze und der Kombinationspartner in einem breiten Bereich zu Formkörpern, insbesondere zu flächenförmigen, wie Überzügen, aber auch Klebschichten und Verfugungen mit erwünschten Eigenschaften, wie einer guten Lösungsmittel- und Wetterbeständigkeit härten. Die Anwendung der erfindungsgemäßen Polymerisatharze, Kombinationen und Modifikationen zur Herstellung von Formkörpern kann aus Lösung in organischen Lösungsmitteln oder nach Säurezugabe aus wäßrigen Systemen, das sind Lösungen in Wasser enthaltenden Lösungsmitteln oder Dispersionen erfolgen. Auch eine Anwendung als Festharz, z.B. als Bindemittel für Pulverlacke, ist möglich.

Besonders geeignet sind die erfindungsgemäßen Polymerisatharze für die Verarbeitung aus wäßriger Lösung oder wäßriger Dispersion, da durch Zugabe von Säure, insbesondere Carbonsäure durch die Bildung von kationischen Gruppen die Wasserlöslichkeit, Wasserdispergierbarkeit und das Emulgiervermögen für hydrophobe Kombinationspartner der erfindungsgemäßen Bindemittel erreichbar sind. Bei der Herstellung von Überzügen aus diesen wäßrigen Dispersionen bzw. wäßrigen Lösungen können übliche Verfahren wie die Kataphorese zur Anwendung gelangen.

Die gewünschten Eigenschaften in bezug auf Wasserlöslichkeit und Emulgiervermögen nach Säurezugabe lassen sich durch Variation des Gehaltes und der Art an basischen Stickstoffatomen und gegebenenfalls auch durch Einführung weiterer hydrophiler Gruppen, z. B. Hydroxylgruppen durch Mitverwendung von Hydroxyäthylmethacrylat bei der Herstellung der Glycidylmethacrylatcopolymeren, einstellen. Mit auf diese Weise optimierten Produkten gelingt es, ohne den Einsatz von niedermolekularen Emulgatoren nach Säurezugabe, lagerstabile wäßrige Lösungen oder wäßrige Dispersionen aus den erfindungsgemäßen Copolymerisatharzen allein oder deren Kombination mit hydrophoben Kombinationspartnern herzustellen.

Durch Variation der hydrophilen und hydrophoben Anteile im Polymerisatharz kann auch das Viskositätsverhalten bei Verdünnung der angesäuerten wäßrigen Lösung und/oder Dispersion beeinflußt werden.

Die erfindungsgemäßen Bindemittel können ohne und mit Pigmenten und/oder Füllstoffen zu Formkörpern, insbesondere flächenförmigen, verarbeitet werden. Bei der Auswahl der Pigmente und Füllstoffe muß man der jeweils vorgesehenen Verarbeitung der Bindemittel-Pigment-Füllstoff-Zusammensetzung Rechnung tragen. Werden die erfindungsgemäßen Bindemittel z. B. als wäßrige Lösung oder Dispersion eingesetzt, bei denen die Aminogruppen als Kationen vorliegen, so dürfen naturgemäß alkalische Pigmente oder Füllstoffe wie Zinkoxid, Calciumcarbonat nicht verwendet werden. Saure Pigmente oder Füllstoffe können durch Salzbildung bzw. Überführung der basischen Stickstoffgruppen in Kationen bestimmte Vernetzungsreaktionen beeinflussen, wie die Reaktion mit Doppelbindungen, die zur Michael-Addition befähigt sind.

Natürlich können in allen Fällen statt einheitlicher Produkte auch Gemische eingesetzt werden, also z. B. bei der Umsetzung der Copolymeren auch Gemische von N-H-Verbindungen und/oder Gemische von mehreren Copolymeren.

Die folgenden Beispiele sollen das erfindungsgemäße Herstellungsverfahren für die Polymerisatharze und deren vielseitigen Kombinationsmöglichkeiten bei der Verwendung erläutern. Darin beziehen sich Teile (T) und % auf das Gewicht. GMA bedeutet Glycidylmethacrylat, MMA = Methylmethacrylat, ÄHMA = Äthylhexylmethacrylat und BMA = n-Butylmethacrylat. Die Aminzahlen sind stets auf den Festkörper bezogen.

<u>Beispiele</u>

1. <u>Herstellung der GMA-Copolymeren</u>

1.1 Von einer Monomermischung, bestehend aus 96 T GMA, 352 T MMA, 352 T ÄHMA und 40 T Azodiisobutyronitril, wurden 30 % in

535 T Xylol gegeben und diese Mischung unter Stickstoff auf 90 °C erhitzt. Nach Anspringen der Polymerisation wurde die restliche Monomermischung innerhalb von 2 Stunden zugegeben. Danach wurde noch 4 Stunden auf 90 - 92 °C geheizt. Erhalten wurde eine Copolymerlösung, die 61,6 % Festkörper und als nicht polymerisierte Monomere 0,4 % MMA, 0,2 % GMA und 0,9 % ÄHMA erhielt.

1.2 Von einer Monomer-Katalysator-Mischung, bestehend aus 96 T GMA, 704 T Styrol und 14,4 T Di-tert.-Butylperoxid, wurden 30 % in 534 T Xylol im Reaktionsgefäß vorgelegt und unter Stickstoff auf 134 °C geheizt. Nach Anspringen der Reaktion wurde die restliche Monomermischung innerhalb von 3 1/2 Stunden zugegeben. Danach wurde noch 1 Stunde bei 138-140 °C gehalten. Nach Zugabe von 268 T Diäthylenglykoldimethyläther erhielt man eine Lösung mit einem Festkörpergehalt von 52,6 % und einer Epoxidzahl von 1,248, bezogen auf Festharz.

1.3 Ein Drittel einer Mischung aus 96 T GMA, 704 T MMA und 40 T Azodiisobutyronitril wurde in 534 T Xylol gegeben und unter Stickstoff auf 88 - 90 °C erhitzt.Dann gab man innerhalb von 2 Stunden die restliche Mischung in das Reaktionsgefäß. Danach wurde die Reaktionsmischung noch 3 h bei 90 - 92 °C gehalten. Man erhielt eine Copolymerlösung mit 67,6 % Festkörpergehalt.

1.4 30 % einer Monomer-Katalysator-Mischung, bestehend aus 96 T GMA, 704 T MMA und 40 T Azodiisobutyronitril, wurden in 534 T Xylol gelöst in einem Reaktionsgefäß unter Stickstoff auf 90 °C erhitzt. Nach Anspringen der Polymerisation gab man die restliche Mischung innerhalb von 2 Stunden zu. Man erhielt eine Copolymerlösung mit 70,5 % Festkörpergehalt.

1.5 30 % einer Mischung, bestehend aus 137,6 T GMA, 206,4 T MMA, 344 T ÄHMA und 34,4 T Azodiisobutyronitril, wurden in 460 T Xylol gelöst und unter Stickstoff auf 88 - 99 °C erhitzt. Nach Anspringen der Polymerisation gab man die restliche Monomermischung innerhalb von 2 Stunden zu. Danach

wurde noch weitere 3 1/2 Stunden auf 92-95°C gehalten. Man erhielt eine Copolymer-Lösung mit 59,7 % Festkörpergehalt.

1.6 30 % einer Mischung, bestehend aus 70 T GMA, 280 BMA und 3,5 Di-tert.-butylperoxid wurden in 150 T Cumol gelöst und unter Stickstoff bis zur Rückflußtemperatur erhitzt. Nach Anspringen der Polymerisation gab man in die restliche Monomerenmischung innerhalb von 2 Stunden zu. Danach wurde noch weitere 3 1/2 Stunden auf 156°C gehalten und unter Temperaturerhöhung auf 180°C das Lösungsmittel im Vakuum weitgehend entfernt (Festkörper 98,4 %). Das Harz wurde beim Abkühlen in Tetrahydrofuran zu einer Lösung mit 60 % Festkörpergehalt gelöst.

2. <u>Umsetzung der GMA-Copolymeren mit NH-Verbindungen</u>

2.1 Umsetzung mit Monoaminen und Ammoniak

2.1.1. 200 T GMA-Copolymer-Lösung, hergestellt nach Beispiel 1.4, wurden mit 60 T 3-Methoxypropylamin, 203 T (R)Solvesso 100 der Esso AG (Alkylaromatengemisch, Siedebereich 160-180°C) bei Raumtemperatur zu einer homogenen Lösung vereinigt, dann 15 Stunden bei 125°C gehalten und überschüssiges Amin mit Lösungsmittel abdestilliert, wobei die abdestillierte Volumenmenge durch Triäthylenglykoldimethyläther ersetzt wurde. Die Destillation wurde abgebrochen, als das Destillat frei von Amin war, d.h. der Verbrauch an 0,1 n HCl weniger als 0,1 ml bei 100 mg Destillateinwaage betrug. Das erhaltene Produkt hatte einen Festkörpergehalt von 32,2 % und eine Aminzahl von 41,8 mg KOH-Äquivalenten/g Festharz.

2.1.2. 75 T GMA-Copolymerlösung, hergestellt nach Beispiel 1.6, wurden in einen Schüttelautoklav gefüllt und 75 T auf -50°C gekühltes Isopropylamin zugegeben. Anschließend wurden 70 T flüssigen Ammoniaks bei -50°C in den Autoklav geschleust und sofort mit dem Schütteln begonnen. Nach Aufheizung auf 80°C wurde die Temperatur für 48 Stunden gehalten, das Reaktionsgefäß abgekühlt, der Ammoniaküberschuß bei 20°C abgegast und das nicht umgesetzte Isopropylamin mit Tetrahydrofuran abdestilliert, wobei die abdestillierte Volumenmenge durch frisches Tetrahydrofuran ersetzt wurde. Die Destillation wurde fortgesetzt, bis das Destillat aminfrei war, d.h. der Verbrauch an 0,1 n HCl weniger als 0,1 ml bei 100 mg Destillat Einwaage betrug. Das erhaltene hellgelbe homogene Produkt hatte einen Festkörpergehalt von 47,4 % und eine Aminzahl von 72 mg KOH-Äquivalenten/g Festharz.

2.2 Umsetzung mit Polyaminen

2.2.1 190 T GMA-Copolymer-Lösung, hergestellt nach Beispiel 1.2, wurden mit 31 T Äthylendiamin, 30 T Tetrahydrofuran und 15 T Diäthylenglykoldimethyläther bei Raumtemperatur zu einer homogenen Lösung vereinigt, dann 15 Stunden am Rückfluß gekocht und überschüssiges Diamin mit Lösungsmittel abdestilliert, wobei die abdestillierte Volumenmenge durch Xylol ersetzt wurde. Die Destillation wurde abgebrochen, wenn das Destillat frei von Amin ist, d. h. der Verbrauch an 0,1 n HCl weniger als 0,1 ml bei 100 mg Destillateinwaage betrug. Das erhaltene Produkt hatte einen Festkörpergehalt von 54,4 % und eine Aminzahl von 81,6 mg KOH-Äquivalenten/g Festharz.

2.2.2 88 T der nach Beispiel 1.3. hergestellten GMA-Copolymer-Lösung wurden mit 30 ml Xylol verdünnt und danach 17,2 T Äthylendiamin und 30 ml n-Butanol zugegeben. Die bei Raumtemperatur homogene Mischung wurde jetzt 8 Stunden unter Rückfluß erhitzt. Die Entfernung von überschüssigem Amin und Lösungsmittel erfolgte durch Destillation unter vermindertem Druck, wobei die Mischung nicht höher als 85 °C erhitzt und das abdestillierte Volumen durch die gleiche Volumenmenge Diäthylenglykoldimethyläther ersetzt wurde. Das Produkt mit Festkörpergehalt 36,7 % und Aminzahl 82 war lagerstabil (die Viskosität nach Gardner-Holdt bleibt bei der 4wöchigen Lagerung bei 50 °C etwa konstant Z 5/Z 6).

2.2.3 282 T GMA-Copolymer-Lösung, hergestellt nach Beispiel 1.1, wurden mit 50 T Äthylendiamin und 90 T n-Butanol bei Raumtemperatur homogen vermischt und dann 11 Stunden unter Rückfluß gekocht. Bei der Aufarbeitung wurde das Lösungsmittel abdestilliert, so daß das Reaktionsprodukt nicht höher als 94 °C erhitzt wurde. Das abdestillierte Volumen wurde durch Zugabe des gleichen Volumens an Diäthylenglykoldimethyläther ersetzt, Festkörpergehalt 44,3 %, Aminzahl 71,1.

2.2.4 620 T GMA-Copolymer-Lösung, hergestellt nach Beispiel 1.1, wurden mit 110 T Äthylendiamin und 100 T Butanol bei Raumtemperatur homogen verrührt und dann 8 Stunden unter Rückfluß gekocht. Die Aufarbeitung erfolgte wie im Beispiel 2.2.3; Festkörpergehalt 39,1 %, Aminzahl 80.

2.2.5 475 T GMA-Copolymer-Lösung, hergestellt nach Beispiel 1.3, und 58 T GMA-Copolymer-Lösung, hergestellt nach Beispiel 1.4, wurden mit 170 ml Xylol in der Hitze verdünnt. Nach Abkühlung auf Raumtemperatur gab man bei 20-30 °C 105 T Äthylendiamin und 170 ml n-Butanol zu. Nach 11stündigem Kochen unter Rückfluß wurde überschüssiges Amin und Lösungsmittel unter vermindertem Druck abdestilliert, wobei das Produkt nicht über 95 °C erhitzt und das abdestillierte Volumen durch Diäthylenglykoldimethyläther ersetzt wurde, Festkörpergehalt 40,1 %, Aminzahl 70.

2.2.6 500 T GMA-Copolymer-Lösung, hergestellt nach Beispiel 1.5, wurden mit 170 T Diäthylenglykoldimethyläther verdünnt und bei Raumtemperatur 144 T Äthylendiamin zugegeben. Nach 8 Stunden Kochen unter Rückfluß wurde das überschüssige Amin abdestilliert und das Volumen durch Diäthylenglykoldimethyläther ersetzt; Festkörpergehalt 38,4 %, Aminzahl 154.

## 3. Herstellung von Formkörpern aus Polymerisatharzen

A Aminogruppen tragende Polymerisatharze als Alleinbindemittel

A 1: 10 T Polymerisatharz-Lösung nach Beispiel 2.2.3 wurden auf Glasplatten mit 100 µm Naßfilmdicke aufgezogen; Trocknung bzw. Härtung bei 20, 120 und 150 °C.

A 2: 10 T Polymerisatharz-Lösung nach Beispiel 2.2.6 wurden auf Glasplatten mit 100 µm Naßfilmdicke aufgezogen; Trocknung bzw. Härtung bei 20, 80 und 120 °C.

B Kombinationen mit Epoxidverbindungen und/oder Epoxidharzen

B 1: 84,6 T Polymerisatharz-Lösung aus Beispiel 2.2.1 wurden bei Raumtemperatur mit 19 T ®Beckopox EP 140 der Hoechst AG, (Epoxidflüssigharz auf Bisphenol-A-Basis, Epoxidäquivalentgewicht 185-195, Viskosität bei 20 °C 10-15 Pa.s), gelöst in 41 T Xylol, gemischt und mit der homogenen Mischung 100 µm dicke Naßfilme auf Glasplatten aufgebracht; Trocknung bzw. Vernetzung bei 20 und 80 °C.

B 2: 42,3 T Polymerisatharz-Lösung nach Beispiel 2.2.1 wurden bei Raumtemperatur mit 49,4 T Beckopox EP 304 der Hoechst AG (Epoxidfestharz auf Bisphenol-A-Basis der Hoechst AG, Epoxidäquivalentgewicht 875-1000, Viskosität 40%ig in Diäthylenglykolmonobutyläther bei 20 °C 430-630 mPa.s), gelöst in 69 T Xylol, vermischt und mit der homogenen Mischung 100 µm dicke Naßfilme auf Glasplatten aufgebracht, Trocknung bzw. Härtung bei 20 und 80 °C.

B 3: 4 T Polymerisatharz-Lösung nach Beispiel 2.2.3 wurden mit 5 T Aceton bei Raumtemperatur verdünnt und dann mit 20 T der Copolymerlösung nach Beispiel 1.1, verdünnt mit 5 T Aceton, bei Raumtemperatur zu einer homogenen Lösung vermischt. Mit dieser Mischung wurden 200 µm dicke Naßfilme auf Glasplatten aufgebracht; Trocknung bzw. Härtung bei 20 und 80 °C.

B 4: 24 T Polymerisatharz-Lösung nach Beispiel 2.2.3 wurden bei Raumtemperatur mit einer Lösung aus 9 T Beckopox EP 301 der Hoechst AG (Epoxidfestharz auf Bisphenol-A-Basis, Epoxidäquivalentgewicht 450-525, Viskosität 40%ig in Diäthylenglykolmonobutyläther bei 20 °C 100-170 mPa.s), 11 T Methyläthylketon, 0,2 T Salicylsäure kombiniert. Mit dieser homogenen Mischung wurden 100 µm Naßfilme auf Glasplatten aufgebracht, Vernetzung bei 80 °C.

0158821

C Kombinationen mit Verbindungen und/oder Harzen, die zur Michael-Addition befähigte Doppelbindungen tragen

C 1: (Versuch zur Beurteilung der Vernetzungsgeschwindigkeit und Vernetzungsdichte) 12,7 T Polymerisatharz-Lösung nach Beispiel 2.2.1 wurden mit 4,5 T Xylol verdünnt und 1,5 T Trimethylolpropan-triacrylsäureester zugegeben. Die zunächst homogene Lösung gelierte innerhalb von ca. 3 min.

C 2: 30 T Polymerisatharz-Lösung nach Beispiel 2.2.3 wurden mit 2,5 T Butandiol-diacrylester homogen vermischt. Die Lösung wurde mit 100 µm Naßfilmdicke auf Glasplatten aufgezogen; Härtung bei 80 °C.

C 3: 30 T Polymerisatharz-Lösung nach Beispiel 2.2.3 wurden mit 2,8 T Trimethylolpropan-trimethacrylsäureester bei Raumtemperatur versetzt. Die homogene Mischung wurde auf Glasplatten mit 100 µm Naßfilmdicke aufgezogen; Härtung bei 80 °C.

C 4: 14 T Polymerisatharz-Lösung nach Beispiel 2.2.3 wurden mit 5,8 T der nachstehend beschriebenen Lösung eines ungesättigten Polyesterharzes vereinigt. Die homogene Mischung wurde mit 100 µm Naßfilmdicke auf Glasplatten aufgebracht; Härtung bei 20 und 80 °C.
Die Polyesterlösung wurde wie folgt hergestellt: 30 T 1,2-Propylenglykol, 17,4 T Dipropylenglykol, 16,8 T o-Phthalsäureanhydrid und 37,2 T Maleinsäureanhydrid wurden bei 200-210 °C bis zur Säurezahl 35 verestert, dann hielt man die Schmelze bei dieser Temperatur bis die Viskosität des Produktes (65%ig in Xylol) V-W nach Gardner-Holdt betrug. Das so erhaltene Harz wurde mit Xylol auf einen Festkörpergehalt von 50 % eingestellt.

C 5: Es wurden dieselben Lösungen wie bei C 4 kombiniert, jedoch wurden zu 14 T Polymerisatharzlösung nur 2,4 T ungesättigte Polyesterlösung gegeben.

C 6: 14 T Polymerisatharz-Lösung nach Beispiel 2.2.3 wurden mit 5,8 T der nachstehend beschriebenen Lösung eines ungesättigten Polyesterharzes vereinigt und die homogene Mischung auf Glasplatten mit 100 µm Naßfilmdicke aufgebracht, Härtung bei 20 und 80 °C. Die Polyester-Lösung wurde hergestellt, indem 1 Mol Isophthalsäure und 1 Mol Maleinsäureanhydrid mit 2,1 Mol Propandiol-1,2 bis zur Säurezahl 25 verestert und das so erhaltene Harz in Diäthylenglykoldimethyläther mit 50 % Festkörpergehalt gelöst wurde.

C 7: Es wurden dieselben Lösungen wie bei C 6 kombiniert, jedoch wurden zu 14 T Polymerisatharzlösung nur 2,5 T Polyesterlösung gegeben, Trocknung bzw. Vernetzung bei 20 und 80 °C.

D Kombinationen mit Isocyanaten und/oder Isocyanatgruppen tragenden Harzen bzw. Verkappungsprodukten.

D 1: (Versuch zur Beurteilung der Reaktivität des Systems) 7 T der Polymerisatharz-Lösung nach Beispiel 2.2.3 wurden mit 1,7 T ®Macrynal SM 510 n (hydroxylgruppentragendes Acrylharz der Hoechst AG, 60%ig in Xylol/Äthylglykolacetat 2/1, Viskosität bei 20° 450-650 mPa.s, Hydroxylzahl ca. 150 mg KOH/g Festharz) homogen vermischt. Bei Zugabe von 2,2 T ®Desmodur N (polyfunktionelles aliphatisches Isocyanat der Bayer AG, 75%ig in Äthylglykolacetat/Xylol 1:1, Viskosität bei 20° 150-350 mPa.s) reagierte die Mischung spontan.

D 2: 3,4 T Polymerisatharz-Lösung nach Beispiel 2.2.3 wurden mit 10 T Macrynal SM 510 n und 2 T Diäthylenglykoldimethyläther homogen verrührt und 4,9 T Desmodur N zugegeben. Die erhaltene Lösung wurde mit 100 µm Naßfilmdicke auf Glasplatten aufgezogen und die Härtung bei 20 °C verfolgt.

D 3: 15 T Polymerisatharz-Lösung nach Beispiel 2.2.3 wurden mit 100 T Macrynal SM 510 n und 12 T Diäthylenglykoldimethyläther verrührt. Zu der homogenen Mischung wurden 45 T Desmodur N gegeben und auf Glasplatten Filme mit 100 µm Naßfilmdicke aufgezogen; Härtung bei 20 °C.

D 4 (Vergleich): 20 T Macrynal SM 510 n wurden mit 8,3 T Desmodur N verrührt und die Mischung, ohne daß ein erfinddungsgemäßes Polymerisatharz zugesetzt wurde, mit 100 µm Naßfilmdicke auf Glasplatten aufgezogen; Härtung bei 20 °C.

D 5: 12 T Polymerisatharz-Lösung nach Beispiel 2.2.3 wurden mit 7 T der nachstehend beschriebenen Lösung kombiniert und die homogene Mischung mit 100 µm Naßfilmstärke auf Glasplatten aufgebracht; Trocknung bei 20 °C und 120 °C. Die Lösung eines verkappten Isocyanates wurde wie folgt hergestellt: Zu 200 T Acetessigsäureäthylester, 0,64 T Zinkacetylacetonat und 80 T Diäthylenglykoldimethyläther wurden bei 75 °C 520 T Desmodur N (75%ig in Xylol) innerhalb von 2 Stunden gegeben. Danach erfolgte die Zugabe von 55 T Acetessigsäureäthylester in 2 Portionen bei 75 °C. Die Temperatur wurde gehalten, bis die Viskosität bei einem Festkörpergehalt von 76,3 % Gardner-Holdt T betrug. 4,2 T des so erhaltenen verkappten Isocyanates wurden danach mit 2,8 T Aceton verdünnt und mit 12 T Polymerisatharzlösung kombiniert.

E Kombinationen mit Aminoharzen

E 1: 14 T Polymerisatharz-Lösung nach Beispiel 2.2.3 wurden mit 2,8 T ®Maprenal LH 80/66 der Hoechst AG (nicht plastifiziertes Melamin-Formaldehydharz, ca. 55%ig in Iso-propanol, Viskosität bei 25 °C 1,7 Pa.s) gemischt und die Mischung auf Glasplatten mit 100 µm Naßfilmdicke aufgezogen; Trocknung bei 20, 80 und 120 °C.

E 2: 14 T Polymerisatharz-Lösung nach Beispiel 2.2.3 wurden mit 1,6 T Maprenal VMF 3904 der Hoechst AG (nichtplastifiziertes Hexamethoxymethylmelaminharz lösungsmittelfrei, Viskosität bei 20 °C 1500-7300 mPa.s) kombiniert und auf Glasplatten mit 100 µm Naßfilmdicke aufgezogen; Trocknung bei 20 und 180 °C.

E 3: 14 T Polymerisatharz-Lösung nach Beispiel 2.2.3 wurden mit 2,4 T ®Resamin HF 131 der Hoechst AG (nichtplastifiziertes Harnstoff-Formaldehydharz 65%ig in Butanol/Xylol, Viskosität bei 20 °C 5000-7000 mPa.s) kombiniert und auf Glasplatten mit 100 µm Naßfilmdicke aufgezogen; Trocknung bei 20 und 120 °C.

E 4: 14 T Polymerisatharz-Lösung nach Beispiel 2.2.3 wurden mit 2,5 T Resamin HF 227 der Hoechst AG (nichtplastifiziertes Harnstoffharz, 63%ig in Äthanol, Vikosität bei 20 °C 550-800 mPa.s) kombiniert und auf Glasplatten mit 100 µm Naßfilmdicke aufgezogen, Trocknung bei 20 und 120 °C.

F Kombinationen mit Verbindungen oder Harzen, die zur Amid- und/oder Imidbildung befähigte Carbonsäure-, Carbonsäureester- und/oder Carbonsäureanhydridgruppen tragen.

F 1: 14 T Polymerisatharz-Lösung nach Beispiel 2.2.3 wurden mit 2 T Malonsäuredimethylester und 1 T Diäthylenglykoldimethyläther vereinigt und die Mischung auf Glasplatten mit 100 µm Naßfilmdicke aufgezogen, Trocknung bei 20 und 80 °C.

F 2: 9 T Polymerisatharz-Lösung nach Beispiel 2.2.3 wurden mit 1,7 T ®Alftalat AC 371 der Hoechst AG (kurzöliges, nicht trocknendes Alkydharz mit 37 % Triglycerid synthetischer Fettsäuren, 60%ig in Xylol, Viskosität bei 20 °C 50%ig in Xylol 550-700 mPa.s, Säurezahl unter 10), und 9 T Xylol vereinigt und die homogene Mischung auf Glasplatten mit 100 µm Naßfilmdicke aufgezogen, Härtung bei 150 und 180 °C.

F 3: 9 T Polymerisatharz-Lösung nach Beispiel 2.2.3 wurden mit 1,7 T Alftalat AN 950 der Hoechst AG (oelfreies Polyesterharz, 70%ig in Xylol, Viskosität bei 20 °C 3200-3800 mPa.s, Säurezahl unter 10), und 4 T Xylol vereinigt und die homogene Mischung auf Glasplatten mit 100 µm Naßfilmdicke aufgezogen, Härtung bei 150 und 180 °C.

F 4: Komponenten wie bei F 3, jedoch 11,3 T Polymerisatharz-Lösung und 8,3 T Alftalat.

F 5: 11,3 T Polymerisatharz-Lösung nach Beispiel 2.2.3 wurden mit 7,1 T Alftalat VAN 1951 der Hoechst AG (oelfreies Polyesterharz, 70%ig in Äthylglykolacetat, Viskosität bei 20 °C 3500 mPa.s, Säurezahl: unter 8), und 4 T Xylol vereinigt und die homogene Mischung auf Glasplatten mit 100 µm Naßfilmdicke aufgezogen, Härtung bei 150 und 180 °C.

F 6: 13 T Polymerisatharz-Lösung nach Beispiel 2.2.6 wurden mit 8,3 T Alftalat AN 950 und 1,6 T Xylol vereinigt und die homogene Mischung auf Glasplatten mit 100 µm Naßfilmdicke aufgezogen, Härtung bei 150 und 180 °C.

F 7: 1,8 T Polymerisat-Lösung nach Beispiel 2.2.3 wurden mit 2 T Diäthylenglykoldimethyläther verdünnt und mit 3,2 T einer Lösung von 2 T Styrol-Maleinsäureanhydrid-Cotelomeren (Molverhältnis Styrol: MSA = 2,58:1, Molekulargewicht 2000) in 8 T Diäthylenglykoldimethyläther vereinigt. Die Mischung wurde auf Glasplatten mit 100 µm Naßfilmdicke aufgezogen und bei 20 und 120 °C getrocknet.

F 8: 1,8 T Polymerisat-Lösung nach Beispiel 2.2.3 wurden mit 2 T Diäthylenglykoldimethyläther verdünnt und mit 1,5 T einer Lösung eines Styrol-Maleinsäurebutylhalbester-Cotelomeren (Molverhältnis Styrol:Maleinsäurehalbester = 3:1) mit 57 % Festkörpergehalt in Butanol vereinigt. Die Mischung wurde auf Glasplatten mit 100 µm Naßfilmdicke aufgezogen und bei 20 und 120 °C getrocknet.

4. Prüfung der Formkörper

Die nach 3 hergestellten Formkörper wurden als Überzüge wie folgt geprüft:

Staubtrocknung: Auf den trocknenden Überzugsfilm werden Glasperlchen (Durchmesser unter 0,1 mm) gestreut und deren Haftung beurteilt. Sobald diese mit einem Pinsel leicht entfernt werden können, ist Staubtrocknung gegeben.

Klebfreitrocknung: Diese wird durch Anfassen des Überzuges geprüft, bis Klebfreiheit gegeben ist.

Beständigkeit gegen Superbenzin: Auf den Überzug gibt man einen mit Superbenzin getränkten Wattebausch und mißt die Zeit bis zum Weichwerden des Überzugs.

Mechanische Eigenschaften: Die Haftung auf dem Untergrund (Ha), die Oberflächenhärte des Überzugs (Ob) und die Bildung eines Spanes beim Abschälen des Überzuges (Sp) werden subjektiv nach Noten beurteilt (1=sehr gut, 5=mangelhaft).

Ergebnisse

In folgender Tabelle wird der jeweils geprüfte Überzug mit der im Abschnitt 3 aufgeführten Beispielnummer gekennzeichnet. Wenn nicht besonders vermerkt, wird der Trocknungsverlauf in bezug auf Staub- und Klebfreitrocknung bei 20 °C verfolgt. Bei der Prüfung der Superbenzinbeständigkeit und der mechanischen Eigenschaften des Überzugs sind die Vernetzungsbedingungen jeweils angegeben.

| Bezeichnung des Formkörpers/Überzuges | Trocknungsverlauf | | Vernetzungsbedingungen | | Eigenschaften des Formkörpers/Überzuges | |
|---|---|---|---|---|---|---|
| | Staubtrocknung (Minuten) | Klebfreitrocknung (Stunden) | Temperatur ($^{o}C$) | Zeit (Stunden) | Superbenzinbeständigkeit (Minuten) | mechanische Eigenschaften |
| I | II | III | IV | V | VI | VII |
| A 1 | 5 | 0,5 | 120 | 0,5 | 1-2 | Ha 1/2 |
| | | | 150 | 0,5 | > 3 | Ha 1/2 |
| A 2 | 20 | 1,0 | 80 | 0,5 | 2 | Ha 1/2 |
| | | | 120 | 0,5 | > 3 | Ha 1/2 |
| B 1 | 12 | 2,5 | 80 | 0,5 | 7 | Sp 1/2; Ha 1; Ob 1/2 |
| B 2 | 3 | 2,5 | 80 | 0,5 | 30 | Sp 1/2; Ha 1/2; Ob 1/2 |
| B 3 | 3 | 2 | 80 | 0,5 | < 1 | |
| B 4 | - | - | 80 | 0,5 | >30 | Sp 1/2; Ha 1; Ob 1/2 |
| C 2 | - | - | 80 | 0,5 | 1-2 | Ha 1/2 |
| C 3 | - | - | 80 | 0,5 | > 3 | Ha 2 |
| C 4 | 28 | 1 | 20 | 24 | 1-2 | Ha 1 |
| | | | 80 | 0,5 | > 3 | Ha 1 |
| C 5 | 36 | 1 | 80 | 0,5 | > 3 | Ha 1 |
| C 6 | 30 | 2 | 20 | 24 | < 1 | Ha 1 |
| | | | 80 | 0,5 | 2-3 | Ha 1 |
| C 7 | 42 | 2 | 80 | 0,5 | 1-2 | Ha 1 |
| D 2 | 24 | 2 | 20 | 7 | 1-2 | Ha 1; Ob 1/2 |
| | | | 20 | 44 | > 3 | |
| D 3 | | | 20 | 7 | < 1 | Ha 1; Ob 1/2 |
| | | | 20 | 44 | > 3 | |

| I | II | III | IV | V | VI | VII |
|---|---|---|---|---|---|---|
| D 4 (Vergleich) | | | 20 | 7 | < 1 | Ha 2; Ob 2 |
| | | | 20 | 44 | < 1 | |
| D 5 | 90 | | 120 | 0,5 | 2-3 | Sp 2; Ha 1; Ob 1 |
| E 1 | 50 | 4,5 | 80 | 0,5 | 2 | |
| | | | 120 | 0,5 | > 3 | Ha 1; Ob 2 |
| E 2 | 60 | 4 | 180 | 0,5 | 2-3 | Ha 1; Ob 1/2 |
| E 3 | 50 | 4 | 120 | 0,5 | 2 | Ha 2 |
| E 4 | 60 | 3 | 120 | 0,5 | 1 | Ha 1; Ob 1/2 |
| F 1 | 60 | 1,5 | 80 | 0,5 | 1-2 | Ha 2 |
| F 2 | | | 150 | 0,5 | 1-2 | Ha 1/2; Ob 3 |
| | | | 180 | 0,5 | > 3 | Ha 1/2; Ob 3 |
| F 3 | | | 150 | 0,5 | 1-2 | Ha 1; Sp 2; Ob 3 |
| | | | 180 | 0,5 | > 3 | Ha 1; Sp 2; Ob 3 |
| F 4 | | | 150 | 0,5 | < 1 | Ha 2; Sp 2; Ob 4 |
| | | | 180 | 0,5 | 1-2 | Ha 2; Sp 2; Ob 4 |
| F 5 | | | 150 | 0,5 | < 1 | Ha 2; Sp 2-3; Ob 3/4 |
| | | | 180 | 0,5 | > 3 | Ha 2; Sp 2-3; Ob 3/4 |
| F 6 | | | 150 | 0,5 | 2-3 | Ha 1; Sp 2; Ob 3 |
| | | | 180 | 0,5 | > 3 | Ha 1; Sp 2; Ob 3 |
| F 7 | 35 | 1 | 120 | 0,5 | > 3 | Ha 1; Ob 1 |
| F 8 | 30 | 1,5 | 120 | 0,5 | > 3 | Ob 2 |

PATENTANSPRÜCHE:

1. Lösliche, harzartige Polymerisate, die primäre und/oder sekundäre Aminogruppen und gleichzeitig Hydroxylgruppen tragen und durch Umsetzung von a) Copolymeren auf Basis von Glycidylmethacrylat mit b) solchen N-H-Bindungen enthaltenden Verbindungen erhältlich sind, die mindestens 2 N-H-Bindungen im Molekül enthalten und deren Siedepunkt bei Normaldruck unter 250°C liegt, die frei sind von monomeren Aminverbindungen und wobei die Glycidylmethacrylat-Copolymeren a) überwiegend von Monomeren abgeleitet sind, die keine oder nur nicht leicht alkalisch verseifbare Gruppen enthalten.

2. Polymerisate gemäß Anspruch 1, dadurch gekennzeichnet, daß sich das Glycidylmethacrylat-Copolymere von Glycidylmethacrylat und Styrol, am Benzolkern substituierten Styrolen und/oder Methacrylestern ableitet.

3. Polymerisate nach Anspruch 1 oder 2, dadurch gekennzeichnet, daß die N-H-Verbindung ein oder zwei Stickstoffatome, 0 bis 8 C-Atome und höchstens ein Sauerstoffatom enthält.

4. Polymerisate nach einem oder mehreren der Ansprüche 1 bis 3, dadurch gekennzeichnet, daß die Komponente a) ein durchschnittliches Molgewicht von 1000 bis 100 000 hat.

5. Polymerisate nach einem oder mehreren der Ansprüche 1 bis 4, dadurch gekennzeichnet, daß die Komponente a) sich zu 1 bis 80, vorzugsweise 5 bis 40 Mol-% von Glycidylmethacrylat ableitet.

6. Polymerisate nach einem oder mehreren der Ansprüche 1 bis 5, dadurch gekennzeichnet, daß sie in mit Säure neutralisierter Form in wäßriger Lösung und/oder wäßriger Dispersion vorliegen.

7. Verfahren zur Herstellung von harzartigen Polymerisaten, die primäre und/oder sekundäre Aminogruppen und gleichzeitig Hydroxylgruppen tragen und die frei sind von monomeren Aminverbindungen, durch Umsetzung von Copolymeren auf Basis von Glycidylmethacrylat mit N-H-Bindungen enthaltenden Verbindungen, die mindestens 2 N-H-Bindungen im Molekül enthalten, dadurch gekennzeichnet, daß

a) N-H-Verbindungen umgesetzt werden, die unter 250°C bei Normaldruck sieden,
b) die Umsetzung in homogener Phase bei 20 - 140°C, vorzugsweise 70 - 125°C durchgeführt wird.
c) die Glycidylmethacrylat-Copolymeren überwiegend von Monomeren abgeleitet sind, die keine oder nur nicht leicht alkalisch verseifbare Gruppen enthalten,
d) mit einem Überschuß über das Äquivalentverhältnis zwischen den N-H-Bindungen in der N-H-Verbindung und Glycidylgruppen gearbeitet wird und
e) der Überschuß an N-H-Verbindungen nach der Umsetzung bei Temperaturen unterhalb 160°C, vorzugsweise unterhalb 140°C, destillativ entfernt wird.

8. Verfahren nach Anspruch 7, dadurch gekennzeichnet, daß die N-H-Bindungen enthaltenden Verbindungen in einer solchen Menge angewendet werden, daß das Äquivalentverhältnis zwischen den N-H-Bindungen und den Glycidylgruppen von einem Mindestwert von 2:1, vorzugsweise 3:1, bei Verbindungen mit 2 N-H-Bindungen auf 8:1, vorzugsweise 12:1, bei 4 N-H-Bindungen ansteigt.

9. Verfahren nach Anspruch 7 oder 8, dadurch gekennzeichnet, daß die destillative Entfernung der N-H-Verbindungen in Gegenwart eines Lösungsmittels erfolgt.

10. Verfahren nach einem oder mehreren der Ansprüche 7 bis 9, dadurch gekennzeichnet, daß der Siedepunkt des in Stufe e) verwendeten Lösungsmittels mindestens 5°C, vorzugsweise mindestens 10°C über dem Siedepunkt der verwendeten N-H-Verbindung liegt.

11. Verfahren nach einem oder mehreren der Ansprüche 7 bis 10, dadurch gekennzeichnet, daß das Glycidylmethacrylat-Copolymere mit Diaminen umgesetzt wird, die unter Normaldruck im Temperaturbereich von 80 - 220°C, vorzugsweise von 110 - 180°C, sieden.

12. Verwendung von Polymerisatharzen nach einem oder mehreren der Ansprüche 1 bis 6 bzw. solchen, die nach dem Verfahren eines oder mehrerer der Ansprüche 7 bis 11 hergestellt worden sind, allein oder in Kombination mit Harzen und/oder anderen Verbindungen, die funktionelle Gruppen tragen, als Bindemittel zur Herstellung von - insbesondere flächenförmigen - Formkörpern.

13. Ausführungsform nach Anspruch 12, dadurch gekennzeichnet, daß die Polymerisatharze aus Lösung in organischen Lösungsmitteln oder nach Säurezugabe aus wäßrigen Systemen angewandt werden.

Patentansprüche für Österreich:

1. Verfahren zur Herstellung von harzartigen Polymerisaten, die primäre und/oder sekundäre Aminogruppen und gleichzeitig Hydroxylgruppen tragen und die frei sind von monomeren Aminverbindungen, durch Umsetzung von Copolymeren, auf Basis von Glycidylmethacrylat mit N-H-Bindungen enthaltenden Verbindungen, die mindestens 2 N-H-Bindungen im Molekül enthalten, dadurch gekennzeichnet, daß

a) N-H-Verbindungen umgesetzt werden, die unter 250°C bei Normaldruck sieden,
b) die Umsetzung in homogener Phase bei 20 - 140°C, vorzugsweise 70 - 125°C durchgeführt wird.
c) die Glycidylmethacrylat-Copolymeren überwiegend von Monomeren abgeleitet sind, die keine oder nur nicht leicht alkalisch verseifbare Gruppen enthalten,
d) mit einem Überschuß über das Äquivalentverhältnis zwischen den N-H-Bindungen in der N-H-Verbindung und Glycidylgruppen gearbeitet wird und
e) der Überschuß an N-H-Verbindungen nach der Umsetzung bei Temperaturen unterhalb 160°C, vorzugsweise unterhalb 140°C, destillativ entfernt wird.

2. Verfahren nach Anspruch 1, dadurch gekennzeichnet, daß die N-H-Bindungen enthaltenden Verbindungen in einer solchen Menge angewendet werden, daß das Äquivalentverhältnis zwischen den N-H-Bindungen und den Glycidylgruppen von einem Mindestwert von 2:1, vorzugsweise 3:1, bei Verbindungen mit 2 N-H-Bindungen auf 8:1, vorzugsweise 12:1, bei 4 N-H-Bindungen ansteigt.

3. Verfahren nach Anspruch 1 oder 2, dadurch gekennzeichnet, daß die destillative Entfernung der N-H-Verbindungen in Gegenwart eines Lösungsmittels erfolgt.

4. Verfahren nach einem oder mehreren der Ansprüche 1 bis 3, dadurch gekennzeichnet, daß der Siedepunkt des in Stufe e) verwendeten Lösungsmittels mindestens 5°C, vorzugsweise mindestens 10°C über dem Siedepunkt der verwendeten N-H-Verbindung liegt.

5. Verfahren nach einem oder mehreren der Ansprüche 1 bis 4, dadurch gekennzeichnet, daß das Glycidylmethacrylat-Copolymere mit Diaminen umgesetzt wird, die unter Normaldruck im Temperaturbereich von 80 - 220°C, vorzugsweise von 110 - 180°C, sieden.

6. Verfahren nach einem oder mehreren der Ansprüche 1 bis 5, dadurch gekennzeichnet, daß sich das Glycidylmethacrylat-Copolymere von Glycidylmethacrylat und Styrol, am Benzolkern substituierten Styrolen und/oder Methacrylestern ableitet.

7. Verfahren nach einem oder mehreren der Ansprüche 1 bis 6, dadurch gekennzeichnet, daß die N-H-Verbindung ein oder zwei Stickstoffatome, 0 bis 8 C-Atome und höchstens ein Sauerstoffatom enthält.

8. Verfahren nach einem oder mehreren der Ansprüche 1 bis 7, dadurch gekennzeichnet, daß die Komponente a) ein durchschnittliches Molgewicht von 1000 bis 100 000 hat.

9. Verfahren nach einem oder mehreren der Ansprüche 1 bis 8, dadurch gekennzeichnet, daß die Komponente a) sich zu 1 bis 80, vorzugsweise 5 bis 40 Mol-% von Glycidylmethacrylat ableitet.

10. Verfahren nach einem oder mehreren der Ansprüche 1 bis 9, dadurch gekennzeichnet, daß das Polymerisatharz als Lösung in organischen Lösungsmitteln oder nach Säurezugabe in neutralisierter Form als wäßrige Lösung und/oder wäßrige Dispersion vorliegt.